# EUROPÄISCHE PATENTSCHRIFT

(11) **EP 0 288 416 B1**
(45) Veröffentlichungstag und Bekanntmachung des Hinweises auf die Patenterteilung: **05.10.1994**
(21) Anmeldenummer: 88710007.1
(22) Anmeldetag: 20.04.1988
(51) Int. Cl.: A01D 78/10

(54) **Heuwerbungsmaschine**
Hay-making machine
Machine de fenaison

(30) Priorität: 22.04.1987 DE 3713474
(43) Veröffentlichungstag der Anmeldung: 26.10.1988
(73) Patentinhaber: H. Niemeyer Söhne GmbH & Co. KG, D-48466 Hörstel (DE)
(72) Erfinder: Ungruh, Josef, D-4440 Rheine (DE)
(74) Vertreter: Busse & Busse Patentanwälte

(56) Entgegenhaltungen:
- EP-A- 0 165 638
- EP-A- 0 203 023
- DE-U- 8 602 563
- DE-U- 8 625 784
- DE-U- 8 712 441
- DE-U- 8 715 674
- GB-A- 2 039 702
- GB-A- 2 057 239
- US-A- 4 615 397

## Beschreibung

Die Erfindung bezieht sich auf eine Heuwerbungsmaschine in einer Ausbildung gemäß dem Oberbegriff des Anspruchs 1.

Bei einer bekannten Maschine dieser Art (EP-A-0 203 023) ist der Außenteil der Seitenträger um die dem Außenteil und dem Innenteil gemeinsame Längsmittelache um 180° relativ zum Innenteil verschwenkbar, wodurch der am Außenteil abgestützte Kreiselrechen in eine Transportschutzstellung gelangt, in der sich dessen Rechzinken bei hochgeklappten Seitenträgern mit ihren Enden zur Maschinenmitte hin erstrecken.

Das Verschwenken der den Außenteilen der Seitenträger zugeordneten Rechzinken in die Transportschutzstellung kann während des Hochschwenkens der Seitenträger durch ein Getriebe mit einem Stellhebel erfolgen, der beim Hochschwenken seines Seitenträgers ein als Zahnsegment ausgebildetes,am Innenteil gelagertes Getriebeteil verschwenkt und mittels eines dem Außenteil zugeordneten Ritzels den Außenteil verschwenkt. Ein solches Getriebe ist baulich außerordentlich aufwendig und zudem sehr empfindlich, so daß es für ein zuverlässiges Funktionieren der regelmäßigen Wartung bedarf. Insbesondere aber liegen die nach innen gerichteten Rechzinken mit ihren Verletzungsgefahren hervorrufenden Enden in Körperhöhe von Personen, so daß Gefahren von Verletzungen gegenüber einer nach außen gerichteten Lage der Rechzinken zwar gemindert, nicht jedoch beseitigt sind.

Aus der EP-A-165 638 ist eine Heuwerbungsmaschine mit einem im wesentlichen horizontal ausgerichteten Querträger bekannt, der ebenfalls einen Mittelträger sowie einen Innenteil und einen Außenteil umfassenden Seitenträger aufweist und mit einer Anzahl von in der Betriebsstellung zum Boden hin gerichteten Rechzinken aufweisendenKreiselrechen ausgerüstet ist. Zum Verschwenken von Seitenträgern ist hier eine Stellstange mit vertikaler Schwenkachse vorgesehen, so daß die äußeren Seitenträger in eine Transportstellung in Fahrtrichtung hinter den mittleren Querträger zu verschwenken sind, in der die Zinken nach hinten ragen. Damit gehen ebenfalls erhebliche Verletzungsrisiken einher. Darüber hinaus ist auch die Schwerpunktlage der Maschine zum Schlepper hin ungünstig beeinflußt.

Es ist Aufgabe der vorliegenden Erfindung, eine Heuwerbungsmaschine der eingangs genannten Art zu verbessern, daß die Spitzen der Rechzinken der dem Außenteil des Seitenträgers zugeordneten Kreiselrechen in der Transportstellung mit einfachen Mitteln in eine Lage gelangen, in der sie keine Verletzungsgefahren für Personen mehr hervorrufen können.

Die Erfindung löst diese Aufgabe ausgehend von einer Heuwerbungsmaschine gemäß dem Oberbegriff des Anspruchs 1 mit den Merkmalen des kennzeichnenden Teils dieses Anspruchs. Hinsichtlich wesentlicher weiterer Ausgestaltungen wird auf die Ansprüche 2 bis 4 verwiesen.

Bei der Heuwerbungsmaschine gemäß der Erfindung erstrecken sich in der Transportstellung der Heuwerbungsmaschine, d.h. bei hochgeschwenkten Seitenträgern, die Rechzinken der an den Außenteilen abgestützten Kreiselrechen nach oben hin und liegen mit ihren freien Enden in einer Höhe, in der sie keine Verletzungsgefahren gegenüber Personen mehr hervorrufen. Die Heuwerbungsmaschine ist dabei baulich sehr einfach und hat in Transportstellung eine transportgerechte, stark verminderte Gesamtbreite, wobei die Transportstellung aller Teile vollautomatisch lediglich durch Betätigen der Druckmittelantriebe für die Seitenträger herbeigeführt wird und in Transport- und in Betriebsstellung eine selbstätige Arretierung der Teile vorliegt.

Weitere Einzelheiten und Vorteile ergeben sich aus der nachfolgenden Beschreibung und der Zeichnung, in der ein Ausführungsbeispiel des Gegenstands der Erfindung schematisch näher veranschaulicht ist. In der Zeichnung zeigen:
- Fig. 1: eine schematische Rückansicht einer ersten Ausführung einer Heuwerbungsmaschine nach der Erfindung in Betriebsstellung ihrer Teile,
- Fig. 2: eine Rückansicht der Maschine nach Fig. 1 mit in Transportstellung überführten Teilen,
- Fig. 3: eine abgebrochene Einzeldarstellung des Außenendes des Mittelträgers und eines damit verbundenen Seitenträgers der Maschine bei Blickrichtung auf die Teile gemäß Fig. 1,
- Fig. 4: eine abgebrochene und vereinfachte Draufsicht zu Fig. 3., und
- Fig. 5: eine Ansicht ähnlich Fig. 2 einer zweiten Ausführungsform einer Heuwerbungsmaschine nach der Erfindung.

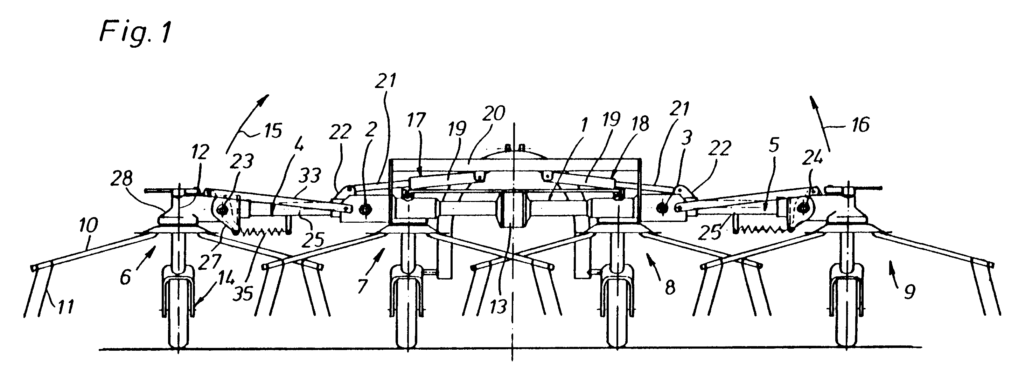

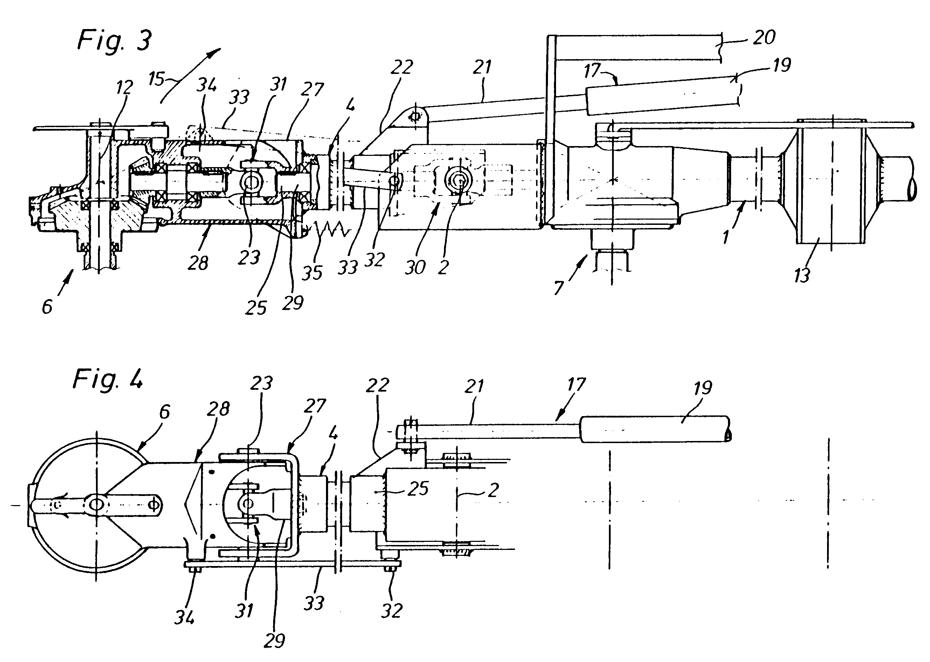

Die in Fig. 1 bis 4 veranschaulichte Heuwerbungsmaschine besteht im einzelnen aus einem rohrförmigen, an einen nicht dargestellten landwirtschaftlichen Schlepper anbaubaren Querträger, der einen Mittelträger 1 und zwei mit diesem jeweils um eine fahrtrichtungsparallele Achse 2,3 gelenkig verbundene Seitenträger 4,5 umfaßt. Die Heuwerbungsmaschine ist mit vier Kreiselrechen 6,7,8,9 versehen, die an den Außenenden von sternförmig angeordneten Armen 10 Rechzinken 11 aufweisen, welche in Betriebsstellung der Teile zum Boden hin gerichtet sind. Sämtliche Kreiselrechen 6,7,8,9 sind am Querträger um Hochachsen 12 drehbar gelagert, wobei zwei Kreiselrechen 7,8 dem Mittelträger 1 und je ein Kreiselrechen 6 bzw. 9 einem Seitenträger 4 bzw. 5 zugeordnet sind. Die Kreiselrechen sind dabei mittels einer im Querträger gelagerten Antriebswelle antreibbar, die ihre Drehbewegung von einem mit der Zapfwelle des Schleppers verbindbaren Zentralgetriebe 13 her erhält.

Die Heuwerbungsmaschine umfaßt ferner Laufräder 14, welche die Maschine während des Betriebs auf dem Boden abstützen und jeweils unter einem Kreiselrechen 6,7,8 bzw. 9 angeordnet sind.

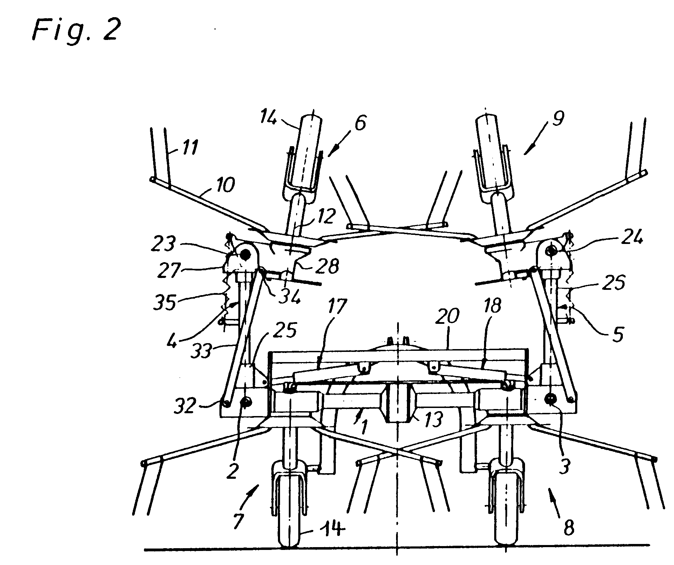

Die Seitenträger 4,5 sind um die fahrtrichtungsparallelen Hauptschwenkachsen 2 bzw. 3 in Richtung der eingezeichneten Pfeile 15,16 aus ihrer im Betrieb im wesentlichen horizontalen Stellung in die in Fig. 2 veranschaulichte Transportstellung hochschenkbar, in der sie sich im wesentlichen vertikal erstrecken. Zum Hochschwenken der Seitenträger 4,5 ist jeweils ein Druckmittelantrieb 17,18 vorgesehen, dessen Zylinder 19 gelenkig an einer parallel oberhalb des Mittelträgers 1 an diesem ortsfest abgestützten Rahmenstrebe 20 angreift und dessen Kolbenstangen 21 gelenkig mit einem Konsolteil 22 an den Seitenträgern 4 bzw. 5 verbunden ist. Werden durch Beaufschlagen der Druckmittelzylinder 17,18 deren Kolbenstangen 21 in die Zylinder 19 eingefahren, so erfolgt das Hochschwenken der Seitenträger 4,5 in die Transportstellung gemäß Fig. 2, in der die Seitenträger 4,5 über die Druckmittelantriebe 17,18 für Transportfahrten verriegelbar sind. Für eine Rückführung der Teile in die Betriebsstellung können die Druckmittelantriebe 17,18 entgegengesetzt beaufschlagt werden oder auch nur drucklos schaltbar sein, in welchem Falle die Rückkehr unter Schwerkraftwirkung, gegebenenfalls mit Federunterstützung, erfolgt.

Die Kreiselrechen 6,9 an den Enden der Seitenträger 4,5 sind ihrerseits um eine fahrtrichtungsparallel ausgerichtete Zusatzschwenkachse 23,24 bei dem Ausführungsbeispiel nach Fig. 1 bis 4 um etwa 90° in eine Transportschutzstellung klappbar, in der sich die Hochachsen 12 der Kreiselrechen 6,9 annähernd parallel zur Längsmittelachse 25,26 ihres Seitenträgers 4 bzw. 5 erstrecken. Bei dem dargestellten Beispiel ist der Schwenkwinkel geringfügig größer als 90°, so daß die Hochachsen der in Transportschutzstellung befindlichen Kreiselrechen 6,9 eine nach oben hin konvergierende Ausrichtung haben. In dieser Transportschutzstellung der Kreiselrechen 6,9 erstrecken sich deren Rechzinken 11 nach oben hin und enden in einer Höhe, die außerhalb des Gefährdungsbereiches für Personen gelegen ist und beispielsweise 2 m und darüber beträgt. Die Gesamtbreite der Maschine ist zugleich auf die Abmessung einer zweikreiseligen Maschine reduziert.

Die Seitenträger 4,5 bestehen jeweils aus einem Innenteil 25 mit einer Gabel 27 an ihrem Außenende und aus einem Außenteil 28, das an den Schenkeln der Gabel 27 um die Zusatzschwenkachse 23 bzw. 24 klappbar angelenkt ist. Der Außenteil 28 bildet eine axiale Verlängerung des Innenteils und umschließt ebenso wie der Innenteil 25 den zugehörigen Teil der Antriebswelle 29, die sowohl im Bereich der Hauptschwenkachsen 2,3, als auch im Bereich der Zusatzschwenkachsen 23,24 je mit einem Kreuzgelenk 30 bzw. 31 versehen ist. Die Gelenkachsen dieser Kreuzgelenke 30,31 liegen mit der Hauptschwenkachse 2,3 bzw. der Zusatzschwenkachse 23,24 jeweils in einer gemeinsamen Ebene.

Am Außenende des Mittelträgers 1 greift in einem Gelenk 32 mit zur Hauptschwenkachse 2,3 im Abstand paralleler Achse eine Stellstange 33 an, deren anderes Ende über ein Gelenk 34 mit ebenfalls zur Zusatzschwenkachse 23,24 paralleler Achse mit dem Außenteil 28 verbunden ist. Die Lage der Gelenke 32,34 ist dabei so gewählt, daß beim Hochschwenken der Seitenträger 4,5 die Stellstange 33 jeweils als Zugstange wirkt, welche den Außenteil 28 mit Kreiselrechen 6 bzw. 9 in die Transportschutzstellung überführt. Beim Herabschwenken der Seitenträger 4,5 führt die Stellstange 33 als Druckstange wirkend ihren Außenteil 28 wieder in die Betriebsstellung gemäß Fig. 1 zurück. In beiden Stellungen wirkt die Stellstange 33 zusätzlich als Verriegelungselement, durch die Außenteile 28 in ihrer jeweiligen Lage zu den Innenteilen 25 Seitenträger 4,5 arretiert sind. Auf diese Weise ersetzt die Stellstange 33 gesonderte Verriegelungsmittel, die grundsätzlich zusätzlich vorhanden sein können.

Zwischen dem Innenteil 25 und dem Außenteil 28 der Seitenträger 4,5 ist jeweils eine Zugfeder 35 vorgesehen, welche den Außenteil 28 in seine Betriebsstellung zurückzuklappen bestrebt ist. Diese Zugfeder 35 unterstützt die Rückklappbewegung des Außenteils 28 beim Rückschwenken der Seitenträger 4,5 in die Betriebsstellung.

Bei dem vorstehend beschriebenen Ausführungsbeispiel sind die Achsen 2,3,23 und 24 sowie die der Gelenke 32,34 sämtlich untereinander parallel sowie dabei exakt fahrtrichtungsparallel ausgerichtet, jedoch können hier gewisse Abweichungen vorgenommen werden, die jedoch 10° nicht überschreiten sollten.

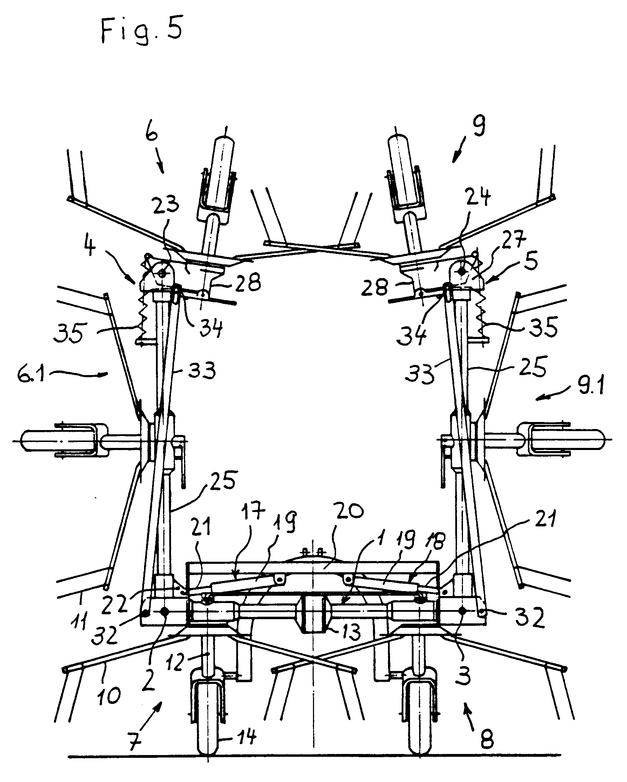

Die zweite Ausführungsform einer Heuwerbungsmaschine nach der Erfindung, wie sie in Fig. 5 veranschaulicht ist, entspricht in allen wesentlichen Einzelheiten der Ausführung nach Fig. 1 bis 4. Übereinstimmende Bauteile sind daher mit gleichen Bezugszeichen versehen. Die Innenteile 25 der Seitenträger 4,5 sind lediglich verlängert und ihrerseits mit einem Kreiselrechen 6.1 bzw. 9.1 versehen, so daß die Maschine über insgesamt sechs Kreiselrechen verfügt. Die Hochachsen 12 der sechs Kreiselrechen 6,6.1,7,8,9,9.1 haben ebenso wie die vier Kreiselrechen 6,7,8,9 der Maschinenausführung nach Fig. 1 bis 4 in Betriebsstellung der Maschine einen untereinander gleichen Abstand. Auch bei der sechskreiseligen Maschine nach Fig. 5 ist in der Transportstellung der Teile die Maschinenbreite annähernd auf die einer zweikreiseligen Maschine verringert, und die an den Außenteilen 28 abgestützten Kreiselrechen 6,9 befinden sich in einer Transportschutzstellung, in der ihre Rechzinken 11 keine Personengefährdung mehr hervorrufen. Die den Innenteilen 25 zugeordneten Kreiselrechen 6.1 und 9.1 bedürfen einer Abschirmung, z.B. durch klappbare Abschirmungsgitter.

## Patentansprüche

1. Heuwerbungsmaschine mit einem rohrförmigen, an einen landwirtschaftlichen Schlepper anhäng- oder an dessen Dreipunkthydraulik anbaubaren, in Betriebsstellung der Maschine im wesentlichen horizontal ausgerichteten Querträger, der einen Mittelträger (1) znd zu beiden Seiten einen mit diesem um eine etwa fahrtrichtungsparallele Hauptschwenkachse (2,3) gelenkig verbundenen, jeweils einen Innenteil (25) und einen Außenteil (28) umfassenden Seitenträger (4,5) aufweist, mit einer Anzahl von in Betriebsstellung zum Boden hin gerichtete Rechzinken (11) aufweisenden Kreiselrechen (6,7,8,9), die am Querträger um Hochachsen (12) drehbar gelagert und mittels einer im Querträger gelagerten Antriebswelle (29) antreibbar sind, mit Laufrädern (14), welche die Maschine während des Betriebs auf dem Boden abstützen und jeweils unter einem Kreiselrechen (6,7,8,9) angeordnet sind, und mit einem jedem Seitenträger (4,5) zugeordneten Druckmittelantrieb (17,18) zum Hochschwenken der Seitenträger (4,5) und zu deren Festlegen in einer Transportstellung, wobei der Außenteil (28) eines jeden Seitenträgers (4,5) lediglich mit einem Kreiselrechen (6,9) versehen und mittels eines Stellhebels (33) um eine Zusatzschwenkachse (23,24) relativ zum benachbarten Innenteil (25) in eine Transportschutzstellung verschwenkbar ist, **dadurch gekennzeichnet**, daß die Zusatzschwenkachsen (23,24) etwa fahrtrichtungsparallel ausgerichtet und die Außenteile (28) um diese klappbar mit den Innenteilen (25) der Seitenträger (4,5) verbunden sind, und daß die Stellstange (33) als direkt über ein Gelenk (34) mit zur Zusatzschwenkachse (23,24) paralleler Gelenkachse am Außenteil (28) angreifende Zug- und Druckstange ausgebildet ist, die in beiden Endstellungen der Seitenträger (4,5) deren Außenteil (28) in seinen jeweiligen Klappstellungen zum benachbarten Innenteil (25) arretiert, wobei die Stellstange (33) an ihrem dem Außenteil (28) ihres Seitenträgers (4,5) abgewandten Ende über ein Gelenk (32) mit zur Hauptschwenkachse (2,3) paralleler Gelenkachse am Mittelträger (1) abstützbar ist.

2. Maschine nach Anspruch 1, **dadurch gekennzeichnet**, daß die Stellstange (33) an ihrem dem Außenteil (28) ihres Seitenträgers (4,5) abgewandten Ende über das Gelenk (32) am Mittelträger (1) in einem Bereich außerhalb der jeweiligen Hauptschwenkachse (2,3) abstützbar ist.

3. Maschine nach Anspruch 1 oder 2, **dadurch gekennzeichnet**, daß zwischen dem Innenteil (25) und dem Außenteil (28) der Seitenträger (4,5) eine Zugfeder (35) vorgesehen ist, welche den Außenteil (28) in seine Betriebsstellung zurückzuklappen bestrebt ist.

4. Maschine nach einem der Ansprüche 1 bis 3, **dadurch gekennzeichnet**, daß neben den Kreiselrechen (6,7,8,9) weitere äußere Kreiselrechen (6.1,9.1) mit zugeordneten Laufrädern (14) vorgesehen sind.

## Claims

1. A haymaking machine with a tubular cross-member adapted to be attached to an agricultural tractor or to its hydraulic three-point linkage and substantially horizontal in the operating attitude of the machine and which comprises a central bearer (1) and on both sides a lateral bearer (4, 5) comprising in each case an inner part (25) and an outer part (28) and connected to the central member (1) for articulation about a main pivot axis (2, 3) substantially parallel with the direction of travel and with a number of rotary rakes (6, 7, 8, 9) having rake tines (11) which in the working position are directed at the soil and which are mounted on the transverse member to rotate about vertical axes (12) being adapted to be driven by a drive shaft (29) mounted in the transverse member and with wheels (14) which during operation support the machine on the ground and which are disposed in each case under a rotary rake (6, 7, 8, 9) and with, associated with each lateral member (4, 5) a pressurised medium drive (17, 18) for upwards pivoting of the lateral members (4, 5) and for fixing them in a transport position, whereby the outer part (28) of each lateral member (4, 5) is provided with only one rotary rake (6, 9) and is by means of a positioning lever (33) adapted to pivot about an additional pivot axis (23, 24) into a transit position, characterised in that the additional pivot axes (23, 24) are aligned substantially parallel with the direction of travel and in that the outer parts (28) are connected to the inner parts (25) of the lateral members (4, 5) so that they can pivot about them and in that the positioning rod (33) is constructed as a push-and-pull rod which, via a joint (34) having an axis of articulation parallel with the auxiliary pivoting axis (23, 24), engages the outer part (28) and which, in both extreme positions of the lateral members (4, 5) locks their outer part (28) in its respective hinged position in respect of the adjacent inner part (25) whereby the positioning rod (33) has at its end remote from the outer part (28) of its lateral member (4, 5) a bracing effect achieved via a joint (32) with, parallel with the main pivot axis (2, 3), an axis of articulation on the central bearer member (1).

2. A machine according to Claim 1, characterised in that at its end remote from the outer part (28) of its lateral member (4, 5) and via the joint (32) on the central bearing (1), the positioning rod (33) can be braced in an area outside of the respective main pivot axis (2, 3).

3. A machine according to Claim 1 or 2, characterised in that between the inner part (25) and the outer part (28) of the lateral members (4, 5) there is a draw spring (35) which seeks to return the outer part (28) to its operating position.

4. A machine according to one of Claims 1 to 3, characterised in that in addition to the rotary rake (6, 7, 8, 9), further outer rotary rakes (6.1, 9.1) are provided which have associated wheels (14).

## Revendications

1. Machine de fenaison destinée à être accrochée ou montée sur le système hydraulique en trois points d'un tracteur agricole et comportant une poutre transversale alignée de manière essentiellement horizontale lorsque la machine est en position de fonctionnement, cette poutre se composant d'une poutre médiane (1) et des deux côtés un support latéral (4, 5) comprenant une partie intérieure (25) et une partie extérieure (28) et relié à la poutre médiane, par une articulation d'axe principal de basculement (2, 3) sensiblement parallèle à la direction de déplacement, un certain nombre de râteaux rotatifs (6, 7, 8, 9) ayant des dents (11) tournées vers le sol en position de fonctionnement, les râteaux étant montés à rotation autour d'axes verticaux (12) sur la poutre transversale et entraînés à l'aide d'un axe d'entraînement (29) logé dans la poutre transversale, des roues de roulement (14) qui soutiennent la machine sur le sol, pendant son fonctionnement et sont prévues chaque fois sous un râteau rotatif (6, 7, 8, 9), ainsi qu'un moyen d'entraînement par fluide sous pression (17, 18) associé à chaque support latéral (4, 5) pour relever par basculement les supports latéraux (4, 5) et les bloquer dans une position de transport pour laquelle la partie extérieure (28) de chaque support latéral (4, 5) uniquement munie d'un râteau rotatif (6, 9) et à' l'aide d'une tige de positionnement (33), peut être basculée autour d'un axe complémentaire de basculement (23, 24) par rapport à la partie intérieure (25) voisine pour passer dans une position protégée pour le transport, caractérisée en ce que les axes auxiliaires de basculement (23, 24) sont alignés sensiblement de manière parallèle à la direction de déplacement et les parties extérieures (28) sont reliées aux parties intérieures (25) des supports latéraux (4, 5) pour basculer et la tige de positionnement (33) est réalisée en forme de tige de traction et de poussée, agissant directement par une articulation (34) parallèle à l'axe auxiliaire de basculement (23, 24) sur la partie extérieure (28), et dans les deux positions de fin de course des supports latéraux (4, 5), la tige de positionnement bloque la partie extérieure (28) dans sa position de basculement respective par rapport à la partie intérieure (25) voisine, la tige de positionnement (33) s'appuyant par son extrémité opposée à la partie extérieure (28) de son support latéral (4, 5), par une articulation (32) d'axe parallèle à l'axe principal de basculement (2, 3) sur la poutre médiane (1).

2. Machine selon la revendication 1, caractérisée en ce que la tige de positionnement (33) est appuyée par son extrémité opposée à la partie extérieure (28) de son support latéral (4, 5), par une articulation (32) sur la poutre médiane (1), dans une zone qui ne coïncide pas avec l'axe principal de basculement (2, 3) respectif.

3. Machine selon la revendication 1 ou 2, caractérisée en ce qu'entre la partie intérieure (25) et la partie extérieure (28) des supports latéraux (4, 5) on a un ressort de traction (35) qui tend à rappeler la partie extérieure (28) dans sa position de fonctionnement.

4. Machine selon l'une des revendications 1 à 3 caractérisée en ce qu'à côté des râteaux rotatifs (6, 7, 8, 9) il y a d'autres râteaux rotatifs extérieurs (6, 9.1) équipés de roues de roulement (14).
